# EUROPÄISCHE PATENTSCHRIFT

(11) **EP 2 364 441 B1**
(45) Veröffentlichungstag und Bekanntmachung des Hinweises auf die Patenterteilung: **26.08.2015**
(21) Anmeldenummer: 09764770.5
(22) Anmeldetag: 24.11.2009
(51) Int. Cl.: G01N 30/46, G01N 30/38, G01N 30/40

(54) **GAS CHROMATOGRAPH MIT STEUERBARER UMSCHALTEINRICHTUNG**
GAS CHROMATOGRAPH COMPRISING A CONTROLLABLE SWITCHING DEVICE
CHROMATOGRAPHE EN PHASE GAZEUSE À DISPOSITIF DE COMMUTATION CONTRÔLABLE

(30) Priorität: 09.12.2008 DE 102008061157
(43) Veröffentlichungstag der Anmeldung: 14.09.2011
(73) Patentinhaber: Siemens Aktiengesellschaft, 80333 München (DE)
(72) Erfinder: STRAUCH, Piotr, 76761 Rülzheim (DE)
(86) Internationale Anmeldenummer: PCT/EP2009/065693
(87) Internationale Veröffentlichungsnummer: WO 2010/066571

(56) Entgegenhaltungen:
- WO-A2-00/17634
- WO-A2-02/063290
- DE-A1- 2 806 123
- DE-A1- 2 840 612
- DE-A1- 19 914 358
- DE-C1- 3 717 456
- GB-A- 978 019
- US-A1- 2004 232 366
- OREANS M ET AL: "Trace analysis in coupled systems" JOURNAL OF CHROMATOGRAPHY, ELSEVIER SCIENCE PUBLISHERS B.V, NL LNKD- DOI:10.1016/S0021-9673(01)93635-0, Bd. 279, 25. November 1983 (1983-11-25), Seiten 357-364, XP026465640 ISSN: 0021-9673 [gefunden am 1983-11-25]

## Beschreibung

Die Erfindung betrifft einen Gaschromatograph, in dem eine Stoffprobe mittels eines Trägergases durch eine erste Trenneinrichtung und anschließend durch eine zweite Trenneinrichtung führbar ist,
- mit einem Druckregler zur Regelung des Druckes des in die erste Trenneinrichtung in Richtung zur zweiten Trenneinrichtung eingeleiteten Trägergases und
- mit einer zwischen den beiden Trenneinrichtungen angeordneten steuerbaren Umschalteinrichtung zum Ausschleusen von Komponenten der Stoffprobe aus dem Weg zu der zweiten Trenneinrichtung, die Umschalteinrichtung enthaltend:
   - einen Hauptgasweg zwischen den beiden Trenneinrichtungen und
   - einen ersten Hilfsgasweg und einen zweiten Hilfsgasweg, die beide jeweils mit dem Trägergas gespeist werden, jeweils zwischen einem Einlass und einem Auslass für das Trägergas zwei in Reihe liegende Strömungswiderstände enthalten und jeweils zwischen den Strömungswiderständen über einen Verbindungsgasweg mit dem Hauptgasweg verbunden sind, wobei der erste Hilfsgasweg an einer der ersten Trenneinrichtung benachbarten Anschlussstelle und der zweite Hilfsgasweg an einer der zweiten Trenneinrichtung benachbarten Anschlussstelle mit dem Hauptgasweg verbunden ist, und wobei einer der beiden Hilfsgaswege in dem Wegabschnitt zwischen seinem Einlass und dem Verbindungsgasweg parallel zu dem dortigen Strömungswiderstand ein steuerbares Ventil aufweist, wobei in dem das steuerbare Ventil enthaltenden Wegabschnitt ein weiterer Strömungswiderstand in Reihe mit dem steuerbaren Ventil und dem dazu parallelen Strömungswiderstand liegt.

Ein derartiger Gaschromatograph ist aus der DE 28 06 123 C2 bekannt. Durch Einstellung unterschiedlicher Druckgefälle zwischen den Hilfsgaswegen der Umschalteinrichtung sowie zwischen diesen und den Anschlussstellen des Hauptgasweges kann den Komponenten einer Stoffprobe, die aus der ersten Trenneinrichtung (Trennsäule oder Trennsäulenschaltung) austreten, der Eintritt in die zweite Trenneinrichtung wahlweise freigegeben oder für die Betriebsart "Schnitt" versperrt werden, wobei im letzteren Fall die Komponenten über den entsprechenden Hilfsgasweg einem nachgeschalteten Detektor oder einer dritten Trenneinrichtung zugeführt werden können. Außerdem kann die erste Trenneinrichtung über die Umschalteinrichtung mit dem Trägergas rückgespült werden. Die zur Umschaltung der Gasströme benötigten Schaltmittel kommen dabei nur mit dem Trägergas, nicht jedoch mit der Stoffprobe in Berührung. Die Haupt-, Hilfs- und Verbindungsgaswege sind in Form eines mehrteiligen Aufbaus mit Kapillaren realisiert, der jedoch verhältnismäßig aufwendig ist, zumal die Teile zueinander justiert werden müssen. Ein im Vergleich dazu wesentlich einfacherer planarer Aufbau der Umschalteinrichtung ist aus der WO 00/17634 A2 bekannt.

Die DE 28 06 123 C2 und WO 00/17634 A2 zeigen unterschiedliche Realisierungen der Druckeinstellung in den Hilfsgaswegen der Umschalteinrichtung, wobei jedoch mindestens ein eigener Druckregler zusätzlich zu dem zur Regelung des Druckes des in den Gaschromatograph eingeleiteten Trägergases erforderlich ist.

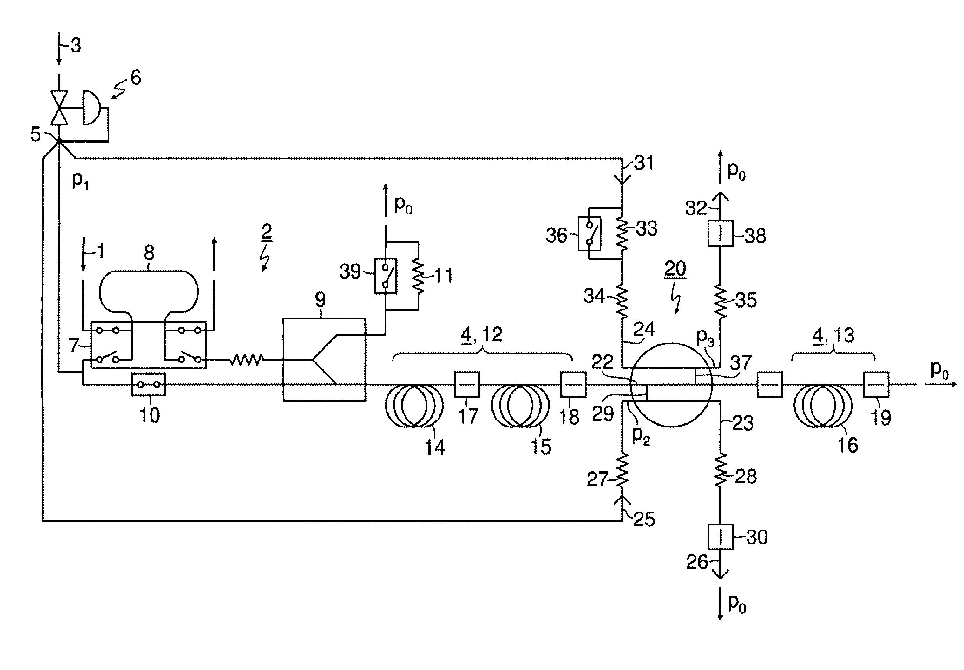

So enthalten bei der in Fig. 1 der DE 28 06 123 C2 gezeigten Umschalteinrichtung beide Hilfsgaswege jeweils einen eigenen Druckregler, wobei der erste Hilfsgasweg zusätzlich hinter dem Ausgang des zugehörigen Druckreglers einen Strömungswiderstand in Form eines Nadelventils sowie ein dazu paralleles steuerbares Magnetventil enthält. Die Druckumschaltung in den Hilfsgaswegen kann auch unter Verzicht auf die beiden Ventile lediglich durch Verstellen des Sollwerts des Druckreglers in dem ersten Hilfsgasweg auf einen höheren bzw. niedrigeren Wert als den an dem Druckregler in dem zweiten Hilfsgasweg eingestellten Wert vorgenommen werden. Die manuelle Einstellung der unterschiedlichen Drücke erfolgt iterativ in mehreren Schritten und ist entsprechend aufwendig. Bei einer beispielsweise zur Optimierung der Trenngeschwindigkeit (Messgeschwindigkeit) bzw. Trennleistung vorgenommenen Änderung des Druckes des in die erste Trenneinrichtung eingeleiteten Trägergases müssen jedes Mal die von den Druckreglern in den Hilfsgaswegen zu liefernden Drücke neu eingestellt werden. Hinzu kommt, dass jeder Druckregler für den Regelbetrieb einen konstanten Laststrom benötigt, was zu einem hohen Trägergasverbrauch führt.

Bei der in Fig. 2 der DE 28 06 123 C2 gezeigten Umschalteinrichtung weisen beide Hilfsgaswege zusammen einen eigenen gemeinsamen Druckregler auf. In dem ersten Hilfsgasweg ist hinter dem Ausgang des Druckreglers ein Nadelventil mit einem dazu parallelen steuerbaren Magnetventil angeordnet. Der zweite Hilfsgasweg enthält hinter dem Ausgang des zugehörigen Druckreglers ebenfalls ein Nadelventil. Auch hier ist die manuelle Justierung der Nadelventile zur Einstellung der unterschiedlichen Drücke in den Hilfsgaswegen aufwendig und erfolgt iterativ in mehreren Schritten. Hinzu kommt, dass der Strömungswiderstand von Nadelventilen temperaturabhängig ist und nicht zuletzt deshalb die genaue Einstellung präziser Druckabfälle mittels Nadelventilen sehr schwer ist. Bei jeder Änderung des Druckes des in die erste Trenneinrichtung eingeleiteten Trägergases müssen die Drücke in den Hilfsgaswegen neu eingestellt werden.

Der Erfindung liegt daher die Aufgabe zugrunde, den konstruktiven und justagemäßigen Aufwand zur Einstellung der Druckverhältnisse in der Umschalteinrichtung zu verringern.

Gemäß der Erfindung wird die Aufgabe dadurch gelöst, dass bei dem Gaschromatograph der eingangs angegebenen Art
- die Einlässe beider Hilfsgaswege an dem Ausgang des einen Druckreglers angeschlossen sind,
- dass die Strömungswiderstände Festwiderstände sind, deren Widerstandswerte derart bemessen sind, dass der Trägergasdruck an dem Abzweig des Verbindungsgasweges von dem ersten Hilfsgasweg bei geschlossenem Ventil größer und bei geöffnetem Ventil kleiner als der Trägergasdruck an dem Abzweig des Verbindungsgasweges von dem zweiten Hilfsgasweg ist.

Der erfindungsgemäße Gaschromatograph weist nur noch einen Druckregler für das Trägergas auf. Damit entfällt der mit mehreren Druckreglern verbundene apparative und regelungstechnische Aufwand und der Trägergasverbrauch wird reduziert. Die Druckverhältnisse in der Umschalteinrichtung ergeben sich aus den Widerstandswerten der Festwiderstände in den Hilfsgaswegen. Diese Widerstandwerte werden dazu einmalig durch Berechnung, beispielsweise anhand eines Rechenmodells des Gaschromatographen, ermittelt und dann in den Festwiderständen realisiert. Bei den Festwiderständen handelt es sich um starre pneumatische Widerstände, die im Unterschied zu Nadelventilen nicht justierbar sind und damit auch nicht justiert werden müssen und deren Strömungswiderstände weitgehend temperaturunabhängig sind. Ändert sich der Druck des dem Gaschromatograph zugeführten Trägergases, so bleiben die Druckverhältnisse in der Umschalteinrichtung unverändert. Dies ermöglicht es in vorteilhafter Weise, zur Optimierung der Trenn- oder Messgeschwindigkeit den Druck des in die erste Trenneinrichtung eingeleiteten Trägergases mittels des Druckreglers zu verändern, ohne dass die Druckverhältnisse in der Umschalteinrichtung nachjustiert werden müssen.

Bei einer vorteilhaften Weiterbildung des erfindungsgemäßen Gaschromatographen ist das steuerbare Ventil in dem zweiten Hilfsgasweg enthalten, so dass beim Umschalten der Druckverhältnisse in der Umschalteinrichtung der Druck an der der ersten Trenneinrichtung benachbarten Anschlussstelle des ersten Hilfsgasweges und damit auch der Druckabfall über der ersten Trenneinrichtung konstant bleibt.

Zur weiteren Erläuterung der Erfindung wird im Folgenden auf die einzige Figur der Zeichnung Bezug genommen, die ein Ausführungsbeispiel des erfindungsgemäßen Gaschromatographen zeigt.

Eine zu analysierende Stoffprobe 1 wird nach Entnahme aus einem technischen Prozess und Aufbereitung, wie z. B. Verdampfung, einer Dosiereinrichtung 2 zugeführt. Die Dosiereinrichtung 2 dient dazu, zu einem vorgegebenen Zeitpunkt eine vorgegebene Dosiermenge der Stoffprobe 1 in Form eines kurzen und scharf begrenzten Probenpfropfes in einen Trägergasstrom 3 einzuschleusen und einer Trennanordnung 4 zuzuführen. Das Trägergas 3 wird an dem Ausgang 5 eines Druckreglers 6 mit vorgebbarem Druck p₁ bereitgestellt. Die Dosiereinrichtung 2 weist eine Dosierventilanordnung 7 auf, welche in einer hier gezeigten ersten Schaltstellung die Stoffprobe 1 in ein Dosiervolumen 8 leitet. In einer zweiten Schaltstellung wird das Dosiervolumen 8 in den Weg für das Trägergas 3 geschaltet, das die Probe 1 aus dem Dosiervolumen 8 einem Injektor 9 zuführt. Solange ein Magnetventil 10 geöffnet ist, fließt das Trägergas 3 durch das Magnetventil 10 und den Injektor 9 in die Trennanordnung 4, während die Probe 1 aus dem Dosiervolumen 8 über einen Strömungswiderstand 11 nach außen abgeleitet wird. Wird das Magnetventil 10 für eine vorgegebene Dauer geschlossen, so wird in dem Injektor 9 aus der Probe 1 ein Teil abgezweigt und als scharf begrenzter Probenpfropf in die Trennanordnung 4 eingeschleust.

Die Trennanordnung 4 dient dazu, die in dem Probenpfropf enthaltenen Komponenten der Stoffprobe 1 beim Durchströmen der Trennanordnung 4 zu trennen, um sie nacheinander detektieren und quantitativ bestimmen zu können. Bei dem hier gezeigten Beispiel besteht die Trenneinrichtung 4 aus zwei aufeinander folgenden Trenneinrichtungen 12 und 13 in Form von hintereinander geschalteten Trennsäulen 14, 15, 16, die unterschiedliche Trenneigenschaften aufweisen und unterschiedlich temperierbar sind. Am Ende jeder Trennsäule 14, 15, 16 ist jeweils ein Detektor 17, 18 bzw. 19 zur Detektion von vorgegebenen und bis dahin vollständig getrennten Komponenten der Stoffprobe 1 angeordnet.

Zwischen der ersten Trenneinrichtung 12 und der zweiten Trenneinrichtung 13 ist eine Umschalteinrichtung 20 eingefügt. Die Umschalteinrichtung 20 weist einen die beiden Trenneinrichtungen 12 und 13 miteinander verbindenden Hauptgasweg 22 und einen ersten und zweiten Hilfsgasweg 23 bzw. 24 auf. Der erste Hilfsgasweg 23 verfügt über einen an dem Ausgang 5 des Druckreglers 6 angeschlossenen Einlass 25 und über einen auf Atmosphärendruck p₀ liegenden Auslass 26 für das Trägergas 3. Zwischen dem Einlass 25 und dem Auslass 26 liegen in Reihenschaltung zwei Strömungswiderstände 27 und 28, zwischen denen der erste Hilfsgasweg 23 über einen Verbindungsgasweg 29 mit dem Hauptgasweg 22 an einer der ersten Trenneinrichtung 12 benachbarten Anschlussstelle verbunden ist. Für den Trägergasdruck p₂ an dem Abzweig des Verbindungsgasweges 29 von dem ersten Hilfsgasweg 23 gilt p₁ > p₂ > p₀. Vor dem Auslass 26 ist ein Detektor 30 für Komponenten der Stoffprobe 1 angeordnet.

Der zweite Hilfsgasweg 24 verfügt ebenfalls über einen an dem Ausgang 5 des Druckreglers 6 angeschlossenen Einlass 31 und über einen auf Atmosphärendruck p₀ liegenden Auslass 32 für das Trägergas 3. Zwischen dem Einlass 31 und dem Auslass 32 liegen in Reihenschaltung drei Strömungswiderstände 33, 34 und 35, wobei parallel zu dem Strömungswiderstand 33 ein steuerbares Ventil 36 angeordnet ist. Zwischen den Strömungswiderständen 34 und 35 ist der zweite Hilfsgasweg 24 über einen Verbindungsgasweg 37 mit dem Hauptgasweg 22 an einer der zweiten Trenneinrichtung 13 benachbarten Anschlussstelle verbunden. Für den Trägergasdruck p₃ an dem Abzweig des Verbindungsgasweges 37 von dem zweiten Hilfsgasweg 24 gilt p₁ > p₃ > p₀. Vor dem Auslass 32 ist ein Detektor 38 für Komponenten der Stoffprobe 1 angeordnet.

Bei den Strömungswiderständen 27, 28, 33, 34 und 35 handelt es sich um Festwiderstände, deren Widerstandswerte derart bemessen sind, dass bei geschlossenem Ventil 36 für die Druckverhältnisse p₁ > p₂ > p₃ und bei geöffnetem Ventil p₁ > p₃ > p₂ gilt. Bei geschlossenem Ventil 36 werden daher aus der ersten Trenneinrichtung 12 austretende Komponenten der Stoffprobe 1 durch den Hauptgasweg 22 in die zweite Trenneinrichtung 13 geleitet. Bei geöffnetem Ventil 36 werden aus der ersten Trenneinrichtung 12 austretende Komponenten der Stoffprobe 1 über den Verbindungsgasweg 29 aus dem Hauptgasweg 22 in den ersten Hilfsgasweg 23 abgezweigt und über dessen Auslass 26 entsorgt oder beispielsweise einer hier nicht gezeigten dritten Trenneinrichtung zugeführt. Schließlich kann bei geöffnetem Ventil 36 die erste Trenneinrichtung 12 aus dem zweiten Hilfsgasweg 24 mit dem Trägergas 3 rückgespült werden, wenn zusätzlich bei der hier gezeigten ersten Schaltstellung der Dosierventilanordnung 7 das Magnetventil 10 geschlossen und am Auslass des Injektors 9 der dortige Strömungswiderstand 11 über ein weiteres Magnetventil 39 kurzgeschlossen wird.

Die Anordnung der Strömungswiderstände 27, 28, 33, 34 und 35 kann auch in Bezug auf die beiden Hilfsgaswege 23 und 24 vertauscht werden. Bei der hier gezeigten Variante ergibt sich der Vorteil, dass der Trägergasdruck p₂ an der der ersten Trenneinrichtung 12 benachbarten Anschlussstelle eines Hilfsgasweges unabhängig von der Schaltstellung des Ventils 36 konstant ist, so dass auch der Druckabfall pᵢ - p₂ über der ersten Trenneinrichtung 12 und damit die Trenngeschwindigkeit/-leistung konstant bleiben.

## Patentansprüche

1. Gaschromatograph, in dem eine Stoffprobe (1) mittels eines Trägergases (3) durch eine erste Trenneinrichtung (12) und anschließend durch eine zweite Trenneinrichtung (13) führbar ist,
- mit einem Druckregler (6) zur Regelung des Druckes (p₁) des in die erste Trenneinrichtung (12) in Richtung zur zweiten Trenneinrichtung (13) eingeleiteten Trägergases (3) und
- mit einer zwischen den beiden Trenneinrichtungen (12, 13) angeordneten steuerbaren Umschalteinrichtung (20) zum Ausschleusen von Komponenten der Stoffprobe (1) aus dem Weg zu der zweiten Trenneinrichtung (13), die Umschalteinrichtung (20) enthaltend:
- einen Hauptgasweg (22) zwischen den beiden Trenneinrichtungen (12, 13) und
- einen ersten Hilfsgasweg (23) und einen zweiten Hilfsgasweg (24), die beide jeweils mit dem Trägergas (3) gespeist werden, jeweils zwischen einem Einlass (25; 31) und einem Auslass (26; 32) für das Trägergas (3) zwei in Reihe liegende Strömungswiderstände (27, 28; 33, 35) enthalten und jeweils zwischen den Strömungswiderständen (27, 28; 33, 35) über einen Verbindungsgasweg (29, 37) mit dem Hauptgasweg (22) verbunden sind, wobei der erste Hilfsgasweg (23) an einer der ersten Trenneinrichtung (12) benachbarten Anschlussstelle und der zweite Hilfsgasweg (24) an einer der zweiten Trenneinrichtung (13) benachbarten Anschlussstelle mit dem Hauptgasweg (22) verbunden ist, und wobei einer der beiden Hilfsgaswege (24) in dem Wegabschnitt zwischen seinem Einlass (31) und dem Verbindungsgasweg (37) parallel zu dem dortigen Strömungswiderstand (33) ein steuerbares Ventil (36) aufweist, wobei in dem das steuerbare Ventil (36) enthaltenden Wegabschnitt ein weiterer Strömungswiderstand (34) in Reihe mit dem steuerbaren Ventil (36) und dem dazu parallelen Strömungswiderstand (33) liegt,
**dadurch gekennzeichnet,**
- **dass** die Einlässe (25, 31) beider Hilfsgaswege (23, 24) an dem Ausgang (5) des einen Druckreglers (6) angeschlossen sind,
- **dass** die Strömungswiderstände (27, 28, 33, 34, 35) Festwiderstände sind, deren Widerstandswerte derart bemessen sind, dass der Trägergasdruck (p₂) an dem Abzweig des Verbindungsgasweges (29) von dem ersten Hilfsgasweg (23) bei geschlossenem Ventil (36) größer und bei geöffnetem Ventil (36) kleiner als der Trägergasdruck (p₃) an dem Abzweig des Verbindungsgasweges (37) von dem zweiten Hilfsgasweg (24) ist.

2. Gaschromatograph nach Anspruch 1, **dadurch gekennzeichnet, dass** das steuerbare Ventil (36) in dem zweiten Hilfsgasweg (24) enthalten ist.

3. Gaschromatograph nach Anspruch 1 oder 2, **dadurch gekennzeichnet, dass** zur Änderung der Trenngeschwindigkeit der Druck (p₁) des in die erste Trenneinrichtung (12) eingeleiteten Trägergases (3) mittels des Druckreglers (6) veränderbar ist.

## Claims

1. Gas chromatograph, in which a material sample (1) can be conducted through a first separating device (12) and then through a second separating device (13) by means of a carrier gas (3),
- having a pressure regulator (6) for regulating the pressure (p₁) of the carrier gas (3) introduced into the first separating device (12) in the direction of the second separating device (13), and
- having a controllable switching device (20) for discharging components of the material sample (1) from the path to the second separating device (13), said switching device (20) being arranged between the two separating devices (12, 13) and containing:
- a main gas path (22) between the two separating devices (12, 13), and
- a first auxiliary gas path (23) and a second auxiliary gas path (24), which are each fed with the carrier gas (3), each contain two flow resistors (27, 28; 33, 35) arranged in series between an inlet (25; 31) and an outlet (26; 32) for the carrier gas (3), and are each connected to the main gas path (22) by a connecting gas path (29, 37) between the flow resistors (27, 28; 33, 35), the first auxiliary gas path (23) being connected to the main gas path (22) at a connection point adjacent to the first separating device (12), and the second auxiliary gas path (24) being connected to the main gas path (22) at a connection point adjacent to the second separating device (13), and one of the two auxiliary gas paths (24) having a controllable valve (36) in the path section between the inlet (31) thereof and the connecting gas path (37), in parallel with the flow resistor (33) at that location, a further flow resistor (34) being arranged in the path section containing the controllable valve (36), in series with the controllable valve (36) and the flow resistor (33) in parallel with the latter,
**characterized**
- **in that** the inlets (25, 31) of both auxiliary gas paths (23, 24) are connected to the outlet (5) of the one pressure regulator (6),
- **in that** the flow resistors (27, 28, 33, 34, 35) are fixed resistors, the resistance values of which are set such that the carrier gas pressure (p₂) at the branch for the connecting gas path (29) from the first auxiliary gas path (23) is greater when the valve (36) is closed and less when the valve (36) is open than the carrier gas pressure (p₃) at the branch for the connecting gas path (37) from the second auxiliary gas path (24).

2. Gas chromatograph according to Claim 1, **characterized in that** the controllable valve (36) is contained in the second auxiliary gas path (24).

3. Gas chromatograph according to Claim 1 or 2, **characterized in that** the pressure (p₁) of the carrier gas (3) introduced into the first separating device (12) can be varied by means of the pressure regulator (6) in order to change the separating rate.

## Revendications

1. Chromatographe en phase gazeuse, dans lequel un échantillon ( 1 ) de substance peut passer, au moyen d'un gaz ( 3 ) porteur, dans un premier dispositif ( 12 ) de séparation et ensuite dans un deuxième dispositif ( 13 ) de séparation,
- comprenant un régulateur ( 6 ) de pression, pour la régulation de la pression ( p₁ ) du gaz ( 3 ) porteur introduit dans le premier dispositif ( 12 ) de séparation en direction du deuxième dispositif ( 13 ) de séparation et
- comprenant un dispositif ( 20 ) de commutation, qui peut être commandé, qui est disposé entre les deux dispositifs ( 12, 13 ) de séparation et qui permet de sortir des constituants de l'échantillon ( 1 ) de substance du trajet vers le deuxième dispositif ( 13 ) de séparation, le dispositif ( 20 ) de commutation comportant :
- un trajet ( 22 ) principal pour du gaz entre les deux dispositifs ( 12, 13 ) de séparation et
- un premier trajet ( 23 ) auxiliaire pour du gaz et un deuxième trajet ( 24 ) auxiliaire pour du gaz, qui sont alimentés tous deux respectivement en le gaz ( 3 ) porteur, contiennent respectivement, entre une entrée ( 25; 31 ) et une sortie ( 26; 32 ) pour le gaz ( 3 ) porteur, deux résistances ( 27, 28; 33, 35 ) à l'écoulement en série et communiquent respectivement, entre les résistances ( 27, 28; 33, 35 ) à l'écoulement, avec le trajet ( 22 ) principal pour du gaz par un trajet ( 29, 37 ) de communication pour du gaz, le premier trajet ( 23 ) auxiliaire pour du gaz communiquant avec le trajet ( 22 ) principal pour du gaz en un premier point de raccordement voisin du premier dispositif ( 12 ) de séparation et le deuxième trajet ( 24 ) auxiliaire pour du gaz en un point de raccordement voisin du deuxième dispositif ( 13 ) de séparation et dans lequel l'un des deux trajets ( 24 ) auxiliaires pour du gaz a, dans le tronçon de trajet entre son entrée ( 31 ) et le trajet ( 37 ) de liaison pour du gaz, en parallèle à la résistance ( 33 ) d'écoulement qui s'y trouve, une vanne ( 36 ) qui peut être commandée, dans lequel, dans le tronçon de trajet contenant la vanne ( 36 ) qui peut être commandée, une autre résistance ( 34 ) à l'écoulement est montée en série avec la vanne ( 36 ) qui peut être commandée et avec la résistance ( 33 ) à l'écoulement en parallèle,
**caractérisé**
- **en ce que** les entrées des deux trajets ( 23, 24 ) auxiliaires pour du gaz sont raccordées à la sortie ( 5 ) du un régulateur ( 6 ) de pression,
- **en ce que** les résistances ( 27, 28, 33, 34, 35 ) à l'écoulement sont des résistances fixes, dont les valeurs sont proportionnées de manière à ce que la pression ( p₂ ) du gaz porteur, à l'endroit où le trajet ( 29 ) de liaison pour du gaz bifurque du premier trajet ( 23 ) auxiliaire pour du gaz et soit, lorsque la vanne ( 36 ) est fermée, plus grande et, lorsque la vanne ( 36 ) est ouverte, soit plus petite que la pression ( p₃ ) du gaz porteur à l'endroit où le trajet ( 37 ) de liaison pour du gaz bifurque du deuxième trajet ( 24 ) auxiliaire pour du gaz.

2. Chromatographe en phase gazeuse suivant la revendication 1, **caractérisé en ce que** la vanne ( 36 ) pouvant être commandée est contenue dans le deuxième trajet ( 24 ) auxiliaire pour du gaz.

3. Chromatographe en phase gazeuse suivant la revendication 1 ou 2, **caractérisé en ce que**, pour modifier la vitesse de séparation, la pression ( p₁ ) du gaz ( 3 ) porteur introduit dans le premier dispositif ( 12 ) de séparation peut être modifiée au moyen du régulateur ( 6 ) de pression.
